# EUROPEAN PATENT APPLICATION

(11) **EP 1 020 832 A1**
(43) Date of publication of application: **19.07.2000**
(21) Application number: 98107675.5
(22) Date of filing: 28.04.1998
(51) Int. Cl.: G08G 1/0969

(54) **Method for generating a location reference instance within a digital map**

(71) Applicant: ROBERT BOSCH GMBH, 70442 Stuttgart (DE)
(72) Inventor: Dorenbeck, Claus, D-21709 Himmelpforten (DE)

(57) **Abstract**

For generating a location reference instance within a digital map an object to be referenced is identified. The position of the object is determined by its coordinates and a descriptor with position independant attributes is identified. For transmission and retrieving the position, the object type and the descriptor is coded in a given format.

Within traffic and telematics applications this method is applicable as communication means between a service provider and user.

## Description

### Background of the invention

In the area of traffic and telematics applications the exchange of information relating to geographic phenomena has been difficult due to the low bandwidth (transmission capacity) of transmission media available. This has become quite obvious with the development of RDS/TMC (Radio Data System/Traffic Message Channel) services. In order to relate any information on a specific part of a road network, the information itself and the affected location, i.e. intersection, stretch of road, etc., has to be communicated. The combination of information and location, as well as time, is commonly referred to as message. Since the available bandwidth for transmission is very limited, messages have been coded. The chosen coding approach for locations is straight forward: a unique code is given to the location. This is an arbitrarily chosen number or identifier which is assigned to specific, predefined locations. Several restrictions have been accepted with this approach:
- The set of locations which can be referenced is limited to the set which has been precoded and distributed in a look-up table.
- The code can only be decoded with a look-up table.
- Transmitter and recsiver rely on exactly the same look-up table to decode a location.
- The code does usually not reveal any information about the geographic area being affected.
- Codes have to be maintained centrally, often on a national level. Pre-defined location codes are very often limited to serve a specific application, e.g.: traffic information service.

Current technology allows to store geographic maps in computer systems. A geographic map being stored in a computer system will be referred to as digital map or digital map databases. The content of a digital map can be described as objects having a specific location in space. The location of an object in a digital map is usually described by means of a co-ordinate system, being a mathematical model referring to the x and y axis in space. Additionally such an object carries attributes describing it in terms of a name and other specific features. The union of attributes and location are an object in a digital map.

Digital maps are produced for a wide range of applications. Standardisation efforts of digital maps have been limited to data models for specific applications, such as the GDF [1] data model which is a CEN standard developed for and used in traffic and telematics applications. Various organisations produce digital maps according to the GDF standard. However, there are some variations with respect to the level of detail and the content actually being captured. This results in the inevitable fact that even though digital maps are according to GDF they can/do slightly differ depending on the producing organisation.

Most in-vehicle navigation systems use digital maps which have been captured according to GDF 3.0. In order to use the above mentioned approach on referring to a specific location (e.g. an intersection) within the RDS/TMC service, a digital map producer would have to store the codes being assigned to any predefined location in attributes of the corresponding objects. This results in a dependency of every map producer on the availability of the look-up table which contains the official code and the appropriate full description of the object.

Another method of location reference has been developed by the ERTICO Committee on Location Referencing [2]. The proposed method is called 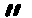 Detailed Location Referencing (DLR) based on Intersection Location (ILOC)". Intersections in road networks are considered as the basic elements of reference. An ILOC is defined as an Intersection identified by its centre co-ordinates and the first 5 characters names or road numbers of three of the intersecting roads. Every reference made is limited to the road network, which can be described by a single ILOC or combinations of ILOCs. Reference to other objects in a digital map is not possible.

### Summary of the Invention

It is an object of the present invention to provide a method for generating a location reference instance within a digital map which allows a more efficient and universal form of referencing. The method of the invention allows to reference to objects independant of their positions within a digital map. According to the steps of claims 1, 2 or 3 an efficient location referencing is achieved not limited by specific object types or applications or predefinded codes due to a strict differentiation between the positions and descriptors/attributors of an object.

### Description of the preferred embodiments

According to the invention a spatial object tag (SPOT) approach is used. This spatial object tag (SPOT) approach on location reference is based on an object-oriented approach to data modelling. For better understanding, the following definitions are given:
- Object:: An object refers to a geographic phenomena (e.g. a road, an intersection, etc.) described in terms of a position and attributes. An object can consist of several other objects.
- Location:: A location describes where an object within a digital map is situated. A location is always associated with an object. The location of an object can be described in either a single position or a set of positions.
- Position:: A position is the precise description of space in terms of a co-ordinate system. A position is at least a pair of co-ordinates. A position itself does not relate to anything.
- Attribute:: An attribute is either a number or text or a combination, describing an object, independent of its position.
- Location reference:: Location reference describes an object in a digital map in a very condensed form, allowing to identify the same object in another digital map, while taking slight variations in position and presentation of the object into account.

The SPOT location reference method relies on the fact, that an object in a digital map consists of two very different parts:
- The location of an object expressod as its position within the digital map.
- Attributes which describe the object regardless of its location.

Efficient location referencing, not limited by specific object types or applications or predefinsd codes, is only possible if a strict differentiation between the position and the attributes of an object is made.

Current content of digital maps compliant with GDF is focused on road networks. Quite often objects carry the same attribute value:
- Several objects of type 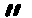 road" may carry the name attribute 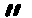 Main Street". These objects are independent of each other. They become unique by their location or relation with other objects in a digital map.
- Several objects of type 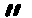 railway" station may carry the name attribute 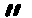 Central station". Again, these objects become unique by their location or relation with other objects.

The location of an object, i.e. its position, is described with co-ordinates. These co-ordinates are assigned to the object in the digitisation process. Digitisation can be done on the basis of a wide range of different sources such as satellite images, aerial photographs, topographic paper maps or cadastral paper maps. Since the resolution, i.e. the level of detail, of certain geographic phenomena differs with regard to the used source, the same object may be located at slightly different positions depending on the used source. The GDF data model allows for slight variations on the representation of objects. Producers of digital maps have different digitising tools and procedures. These tools and procedures do also impact the location of an object.

By means of location reference one has to describe an object in a digital map and check/present the same object in a different digital map. This can be done in two different ways:

An object can be referred to by its name. This may lead to a rather large set of objects satisfying the requested name. Significant additional effort is necessary in order to find exactly the one object in question. It may even be possible that the object being searched for can not be found due to missing or different relations within the queried digital map, even though it does exist within that digital map.

An object can be referred to by its position, i.e. the co-ordinates of the used digital map. Most likely this object will have different co-ordinates in another digital map, due to the digitisation process. However, if a search radius is generated around the original (transmitted) position of a queried object and the type of the object is known, it is very likely to find an object, satisfying the object type within the search radius. Parameters that determine the search radius are the object type, the resolution of the digital maps, the performance of the involved systems and some other factors.

The existence of an object in a digital map depends on the capturing rules being applied. The accuracy of an object location depends on the capturing process. This implies that if a location shall be referenced it should be done by the position of the object instead of attributes of the object. It must be assumed that the transmitter of a location reference does not know, whether the receiver has the object in question or how exactly the object has to be referenced by means of attributes. Using the position of an object and allowing for a search radius around the position in the receiving digital map grants an unambiguous solution.

The following prerequisites have to be considered. The object exists in reality. The object is either captured in a digital map or not. Real world information associated with an object is either captured as attribute of the object or attributes of sub-objects. This real world information describes the object. Parts of this information are sufficient to make the object itself unique with regard to the object type and the area within the object is located. The larger the area becomes, the more parts of information must be supplied to make it unique within the possible set of objects of this type. This part of information, stored in an attribute, is called descriptor.

Every object has a position within a digital map as well as real world information. A position in real world or in digital map is a pair of co-ordinates. The position of an object in a digital map depends on the quality, accuracy and precision of the capturing process. Due to the capturing process the same object will have slightly different positions in different digital maps.

With regard to the location reference as defined before the following can be concluded:
- An object is either in the digital map or not.
- Referencing an object by its attributes can become difficult considering the fact, that variations of the data model are possible.
- The position of an object may vary between digital maps, due to the capturing prosess. Therefore, location reference must support a spatial range query based on a given position in order to determine the existence and allow the presentation of the requested object. Actually the method for location reference according to the invention is based on the following propositions:

### A Position:

- has at least x, y co-ordinates

### An Object Instance:

- is of exactly one object type (belongs to an object class)
- has at least one position within the given digital map (which is its location)
- has attributes of its own or attributes of its sub-objects
- some or all attributes of an object always refer to real world information.

The prosess of SPOT losation reference between digital maps can be divided into three steps:
Generate the location reference instance (in order to compact the location reference)
Transmit the location reference instance (via any transmission media)
Verify the location reference instance (Find and present the object being referred to)

Verifying a location reference is a retrieval method of objects in digital maps. An object is identified within a digital map. In order to determine the same object in a digital map of another map producer, the following components of a location reference instance will be generated, transmitted and verified:
- POSITION:: the object type determines the number of positions necessary to describe the location of an instance of this object type. Every position needed to describe the location of an object are part of the location reference.
- OBJECT TYPE:: each instance of an object belongs to exactly one object type
- DESCRIPTOR:: the object type determines the part *of* an attribute of the object, i.e. the descriptor, which contains real world information and may be necessary to verity the actual object in case more than one object satisfies the spatial range query.

The SPOT location reference method is now further described using several steps.

### Generation of a location reference instance:

In digital map A: This is the digital map being used to create the location reference of an object
- Identify the object which shall be referenced
- Determine the position of the object by its co-ordinates,
- Identity the descriptor of the object: the part of an attribute to solve final doubts
- Code the position, the object type and the descriptor into a specified physical format

### Transmission of a location reference instance:

- Transmit this code.

### Verify the location reference instance:

In digital map B: This is the digital map being used to present the location which is being referred to
- Decode into position, the object type and the descriptor from the physical format into the system format
- Determine the position by its co-ordinates
- Start a range query on the position: (this is the actual verification process)
   Generate a "search window" around the position.
   Collect all objects of the requested object type within the "search window".
   Verify the given descriptor with the descriptor of the collected objects.
   Select that object which is in the "search window" and matches the descriptor,
   Present the result

Within traffic and telematics applications the method according to the invention will be applicable as communication means between service provider and user. On behalf of the receiver a navigation system is perfectly well suited to make use of the shown method. Additional databases or look-up tables to keep location codes become obsolete. Digital map producers who provide maps for navigation systems do no longer need to store predefined codes to enable traffic and telematic services to refer to a certain object within the digital map of the navigation system. In general the described method can be implemented whenever location referencing of objects between similar digital maps is needed. The method allows to transfer the reference information of an object through low bandwidth transmission media.

### References:

[1] ENV ISO 14825 "Geographic Data File (GDF) 3.0"; Digital Map Database Standard (data model, data dictionary, exchange format), CEN/TC278; 12 October 1995.
[2] Ralf Duckeck, Volker Hiestermann, Hugh Milton, Kees Wevers: "Rules for defining and referencing an Intersection Location (ILOC}; Detailed Location Referencing (DLR) for ITS based on ILOCs's; draft report of ERTICO Committee on Location Referencing, Version 0.7; Brussels, Belgium; 14 October 1997.

## Claims

1. Method for generating a location reference instance within a digital map comprising the steps of:
- identifying an object to be referenced
- determining the positon of the object by its coordinates within the map,
- identifying a descriptor of the object in the form of attributes, independant of its position, necessary to verify the actual object in case of more than one object satisfies a spatial range criteria
- coding the position of the object, the object type and the descriptor in a given format.

2. Method according to claim 1 by transmitting generated location reference in the given format via a given transmission media.

3. Method according to claims 1 or 2 further comprising the steps of:
- decoding into position, the object type and the descriptor location reference data into a given system format, which can be different from the given format,
- determining the position of the object,
- verifying the given descriptor within a search window around the decoded position of the object.
